# EUROPEAN PATENT SPECIFICATION

(11) **EP 0 448 571 B1**
(45) Date of publication and mention of the grant of the patent: **22.03.1995**
(21) Application number: 89913025.6
(22) Date of filing: 29.11.1989
(51) Int. Cl.: H02J 3/00

(54) **A METHOD FOR SUPPLYING ELECTRICITY**
VERFAHREN ZUR ELEKTRIZITÄTSVERSORGUNG
PROCEDE POUR FOURNIR DE L'ELECTRICITE

(30) Priority: 29.11.1988 SE 8804322
(43) Date of publication of application: 02.10.1991
(73) Proprietor: POWERMAN AKTIEBOLAG, S-612 00 Finspang (SE)
(72) Inventor: HANSSON, Hans-Erik, S-612 00 Finspang (SE)
(74) Representative: Nilsson, Karl Ingvar
(86) International application number: SE8900694
(87) International publication number: WO9006612

(56) References cited:
- EP-A- 0 254 098
- WO-A-85/01851
- US-A- 4 059 747

## Description

The present invention relates to a method of supplying electricity to an electricity consumer area in which consumption of electricty varies and to which electricity is supplied from a distribution network which is intended to supply a plurality of such consumer areas, wherein the network is alleviated of peak-loads, or drains, by bringing into use at least one auxiliary power-unit, which is separate from the network per se, and/or by disconnecting one or more of the loads within the consumer area. By electricity consumer area is meant here, for instance, primarily one large industry or one larger or smaller municipality or community, although the method can be applied advantageously in conjunction with the supply of electricity to relatively large regions or areas which contain several communities and/or industries. By peak- load and peak-power as used here and in the following is meant the power taken from the networks when the demand thereon is at a maximum.

Distribution networks which are intended to supply electricity simultaneously to a plurality of consumer areas in which the consumption of electricity varies must be dimensioned so that the peak loads which are liable to occur can be both controlled and accommodated within the network. This results in large investment costs for the construction of a distribution network which will have a capacity sufficiently large to accommodate peak-loads. This capacity, however, will on average not be utilized to the full, and the original investment costs together with the cost of producing the electricity to meet demands must be covered by billing the areas in which the electricity is consumed. Billing is normally effected by charging a higher tariff to those consumer areas with high peak- consumption than consumer areas with lower peak- consumption. For instance, the authority producing the electricity consumed may divide the year into periods, each of one month duration for example, during which the amount of electricity consumed by the various consumer areas and the power load on the distribution network is measured, wherein each consumer area is charged an additional tariff for each said period, wherein the extent of the tariff is based on the average value of the highest loads placed on the network during the period in question. For instance, the additional tariff may be based on the three highest power-loads over the period concerned, wherein the average value is calculated, in each case, for a relatively short part of this period, e.g. one hour.

It will therefore be seen that a varying consumption of electricity implies serious drawbacks of an economical and a technical nature, both to the producer and to the consumer. It has been suggested that peak loads on the distribution network can be avoided or alleviated, by disconnecting temporarily one or more loads from a consumer area supplied by the network, or by supplying electricity to said consumer area from auxiliary power-units which are normally external of the distribution network and which are brought into use temporarily, to meet the additional demand over the peak periods. The disconnection of loads from the network will normally result in production losses, which is expensive, whereas the regular use of smaller auxiliary power-units, such as small diesel-driven electrical generators, to meet the additional power demands at peak consumer periods is very expensive.

A method according to the preamble of claim 1 is described in EP-A- 0 254 098.

The object of the present invention is to provide a novel and advantageous method which will result in optimum use of available electricity supply resources.

To this end it is proposed in accordance with the invention that when practising a method of the kind defined in the introduction the power taken by the consumer area from the network is measured; that there is established a prognosis of the average power consumption of said consumer area over at least some of a plurality of part-periods, e.g. hours, which together form a full period, e.g. a month, on the basis of factors which influence the level of power consumption, for instance such factors as a given time of day, a particular day of the week, the date, the ambient temperature, wind, etc.; and that during the part-period concerned there are avoided only those predicted peak-loads on the network which would cause the average load on said network during the part-period concerned to exceed at least the lowest average power-load on the distribution network during a pre-determined number of those earlier part-periods within the same full-period which have the highest average power load thitherto. This method of procedure will ensure, adavantageously, that the aforesaid expensive running of auxiliary power-units and/orthe disconnection of loads from the network will be limited essentially to those occasions when such measures are fully justified from an economical and technical aspect.

According to one further embodiment of the invention, there are avoided or alleviated solely those predicted power loads which at the same time exceed a minimum value predetermined for the full-period in question. This will avoid disconnecting loads and/or engaging an external, auxiliary power-unit on the occasion of relatively low peak-loads which will be exceeded by higher peak-loads later on in the same full-period.

In order to avoid unnecessary use of the method, the method is suitably only applied during full-periods or part-periods over which the average load on the network is relatively high. In the case of a community of normal size, this average load will usually peak between 06.00 hours and 22.00 hours (6 a.m. and 10 p.m.) on weekdays and hence the method need not be applied at weekends or between 22.00 hours and 06.00 hours (10 p.m. and 6 a.m.) during the weekday.

The power-unit used may conveniently comprise at least one motor-driven electric generator, the motor of which is preferably started with the aid of the generator, which is therewith designed so as to enable it to be driven from the network. This will avoid favourably the need to provide starting batteries and a start motor for starting the generator drive-motor.

So that the invention may be more readily understood and further features and advantages thereof made apparent, the invention will now be described in more detail with reference to an exemplifying embodiment thereof illustrated in the accompanying drawings, in which
Fig. 1 is a diagram which illustrates the application of the invention; and
Fig. 2 is a diagram which illustrates the important significance of the power-unit in alleviating or avoiding peak loads on the distribution network, despite the low contribution of the power-unit to the total amount of electricity supplied.

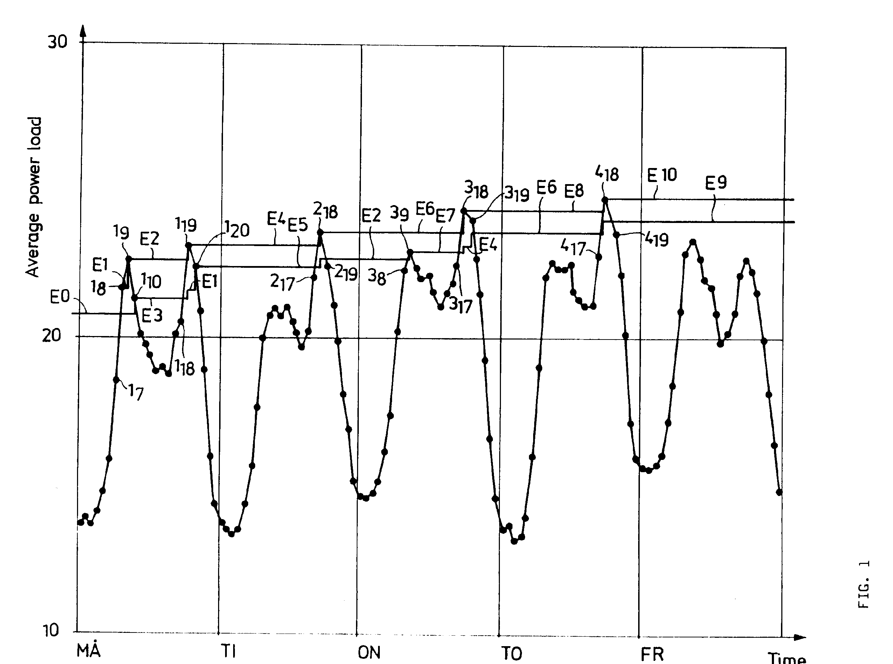

Shown in the Fig. 1 diagram is the average power load which, when practising the inventive method, is placed on a distribution network by one community or consumer area of a plurality of communities or consumer areas serviced by the network. The diagram illustrates the average power load on the network over each hourly period of a five-consecutive-day period (MA-FR), namely from Monday 00.00 hours to Friday at 24.00 hours, the time periods being placed along the horizontal axis and the power load along the vertical axis. The times are given in terms of the 24.00 hour clock. The five-day period MA-FR is thus divided into part-periods, each of one hour duration, and at the beginning of each hour there is shown the average load on the distribution network measured during the immediately preceding hour. In order to avoid excessive drains on the network, the consumer area in question is also provided with an auxiliary power-supply unit, in the form of a number of electricity-generators, which are driven by diesel motors, periodically in accordance with the invention and which when operating deliver a total output of 2.5 MW.

On the basis of experience gained with regard to those factors that have an influence on power demand, and hence power consumption, such as the date, the time of day, the ambient temperature, wind conditions etc., there has been made, in accordance with the invention, a prognosis of the average power consumption of the consumer area during each of the aforesaid part-periods, wherein the auxiliary power-unit is operated during certain part-periods over which, according to the prognosis, the consumption will be high. More specifically, the power-unit is used in this case in order to avoid, within the MA-FR period, those predicted peak-loads on the distribution network which would cause the average load on said network to exceed at least the lowest average load over the three earlier part-periods within the MA-FR period which recorded the highest average load thitherto. However, in order to prevent unnecessary use of the power-unit, there are avoided solely those predicted loads on the network which, at the same time, exceed a pre-determined minimum value for the period in question and which minimum value will, in all probabilities, be exceeded several times later on in the MA-FR period.

The reference EO in Fig. 1 indicates a pre-determined minimum value of the predicted average power-load on the distribution network. Thus, during the MA-FR period no power-unit is used during part-periods in which, according to the prognosis, the average load will not exceed EO. During the first hours of the Monday-period MA, both the predicted average load on the network and the average loads marked with dots are much lower than EO, and the auxiliary power-unit is therefore not used. At 07.00 hours (7 a.m.), corresponding to point 1₇ which illustrates the average load on the network during the part-period falling between 06.00 and 07.00 hours (6 a.m. to 7 a.m.), the prognosis showed, however, that the level EO would be exceeded during the next following part-period, i.e. between 07.00 and 08.00 hours, and consequently the power-unit was started, so as to supply the consumer area with 2.5 MW from the power-unit in parallel with the power supplied from the distribution network. At 08.00 hours, corresponding to point 1₈, the average load on the network was measured for the part-period between 07.00 and 08.00 hours. This average load, E1, was found to lie above EO and the prognosis indicated a further increase in the average load on the network over the following part-periods, i.e. between 08.00-09.00 hours (8-9 a.m.). Consequently, the auxiliary power-unit was also operated during the following part-period, over which the average load on the network was at a level E2, i.e. a level above both the levels EO and E1. At 09.00 hours, corresponding to point 1₉, the prognosis indicated that although the average load on the network would fall during the following part-period, this load would still exceed the levels EO, E1 and E2 with the power-unit switched-off, and consequently the power-unit was kept running for a further hour, i.e. until 10.00 a.m. corresponding to point 1₁₀. During the part-period between 09.00 and 10.00 hours (9 and 10 a.m.), the average load E3 on the circuit exceeded EO, but was below E1 and E2. This average load-level E3 was used in the future as a minimum value for deciding whether or not to bring the auxiliary power-unit into operation, since E3 then constituted the lowest power-load level during three earlier part-periods, i.e. the part-periods extending from 07.00-08.00 hours, 08.00-09.00 hours and 09.00-10.00 hours and having the highest average power-load thitherto. At 10.00 hours, corresponding to point 1₁₀, the prognosis indicated that with the power-unit shut down, the average load on the distribution network would be lower th an E3, and consequently the power-unit was closed down. At 18.00 hours, 6 p.m., corresponding to 1₁₈, the prognosis indicated that at least one of the average power-load levels E3, E1 and E2 would be exceeded over the part-period between 18-19 hours (6 and 7 p.m.), and consequently the auxiliary power-unit was started-up at 18.00 hours and delivered 2.5 MW of powerfrom this instant. The average load during the part-period between 18.00 hours and 19.00 hours nevertheless reached a level E4 above E2, E1 and E3. E3 was now replaced by E1 as the minimum value on which to decide whether or not the power-unit should be brought into operation. At 19.00 hours (7 p.m.) corresponding to point 1₁₉, the prognosis showed that although the average load on the network would fall between 19.00 and 20.00 hours, it would exceed at least one of the levels E4, E2 and E1 with the power-unit disconnected. Consequently, the power-unit was kept running for a further hour, i.e. until 20.00 hours (8 p.m.), corresponding to point 1₂₀, at the end of which time the power-unit was switched-off. During the part-period from 19.00 to 20.00 hours, the average load on the distribution network was found to reach the level E5, which exceeded E1, but not E2 or E4. E1 was therefore replaced with E5 as the aforesaid minimum value.

It was not until 17.00 hours (5 p.m.), corresponding to 2₁₇, on the following day TI that the prognosis indicated that at least one of the average power-load levels E4, E2 and E5 would be exceeded during the part-period between 17.00 and 18.00 hours (5 and 6 p.m.), whereupon the power-unit was brought into operation and kept running for two hours. At 18.00 hours, corresponding to point 2₁₈, it was established that the average load on the distribution network had reached a level E6 above E4, E2 and E5, and consequently E5 was replaced by E2 as the future minimum value on which to decide whether or not to bring the auxiliary power-unit into operation to avoid peak-loads. As shown by point 2₁₉, the average load on the distribution network during the part period between 18.00 and 19.00 hours (6 and 7 p.m.), was beneath the three thitherto highest average power-load levels E6, E4 and E2.

During the third day ON, (Wednesday) of the MA-FR period, the prognosis indicated that at 08.00 hours (8 a.m.), corresponding to point 3₈, at least one of the levels E6, E4 and E2 would be exceeded during the part-period between 08.00 and 09.00 hours, and consequently the auxiliary power-unit was brought into action and operated for one hour. At 09.00 (9 a.m.), corresponding to point 3₉, it was established that the average power-load on the network during the part-period from 08.00 to 09.00 hours had reached a level E7, which lay below the levels E6 and E4, but above the level E2, and consequently E2 was replaced with E7 as the minimum value. The auxiliary power-unit was also operated between 17.00 hours and 19.00 hours (5 and 7 p.m.), these time points being represented by the points 3₁₇ and 3₁₉. At 18.00 hours (6 p.m.), corresponding the point 3₁₈, it was established that the average load on the network during the part-period between 17.00 and 18.00 hours had reached a level E8 which lay above the levels E6, E4 and E7, and consequently the level E7 was substituted with the level E4, this latter level then forming the aforesaid minimum value. At 19.00 hours (7p.m.) it was established that the average load on the network during the part-period between 18.00-19.00 hours had reached a level E9 which was below the level E8, but above the levels E6 and E4, this latter level E4 being then replaced by level E6 as said minimum value.

The 17.00 hours prognosis (5 p.m.) on the fourth day TO (Thursday) of the MA-FR period, corresponding to point 4₁₇ in Fig. 1, indicating that at least one of the average power-load levels E8, E9 and E6 would be exceeded during the part-period from 17.00 to 18.00 hours (5 to 6 p.m.), and consequently the auxiliary power-unit was brought into operation and run for two hours. At 18.00 hours, corresponding to point 4₁₈, it was found that the average load on the distribution network had reached a level E10 which lay above the levels E8, E9 and E6, and consequently E6 was made redundant as the minimum value. As will be seen from point 4₁₉, the average load on the distribution net during the part-period from 18.00 to 19.00 hours lay beneath the three thitherto highest average load-levels E10, E8 and E9, and consequently no action was taken.

The prognosis indicated that the power-load level E9 would not be exceeded during the fifth day FR (Friday) of the MA-FR period, and consequently the power-unit was not used.

It will be evident from Fig. 1 that in the illustrated case it is unnecessary to make a prognosis for the part-periods occurring between 22.00 hours and 06.00 hours (10 p.m. and 6 a.m.), since there would be no need to use the auxiliary power-unit during these part-periods. Similarly, there is no need to make a prognosis for, e.g., the part-periods between 11.00 and 16.00 hours (11 a.m. and 4 p.m.). Thus, in the illustrated case it suffices to apply the inventive method solely between 06.00 and 22.00 hours, or between 06.00 and 11.00 hours, and between 04.00 and 22.00 hours, in other words during those part-periods when it may be necessary to use the auxiliary power-unit. Neither is it necessary to use the auxiliary power-unit in certain consumer areas during Saturdays and Sundays. In the described example, the period MA-FR includes a five day period, although it will be understood that the period, i.e. the full-period, may embrace a longer period of time, such as a month, in which case no prognosis need be made for Saturdays, Sundays and holidays and during certain parts of the weekdays, as will be evident from the aforegoing.

As beforementioned, the auxiliary power-unit may comprise a plurality of motor-driven electrical generators, e.g. diesel-motor driven generators. In this respect, when the prognosis-technique has been refined, it is possible, when the need for additional power arises, to operate solely that number of electric generators which during a given part-period are actually required to avoid an average load on the distribution network which would exceed the average load during each of a predetermined number of previous part-periods having the thitherto highest average power-load. The electrical generators will suitably be constructed, e.g. have the form of a suitable inductance-type motor, to enable them to be driven from the distribution network and therewith replace the start-motor and associated starting batteries for the respective drive-motor. When the drive motor is running, it functions to drive the electric generator, which delivers auxiliary power to the network supplying the consumer area.

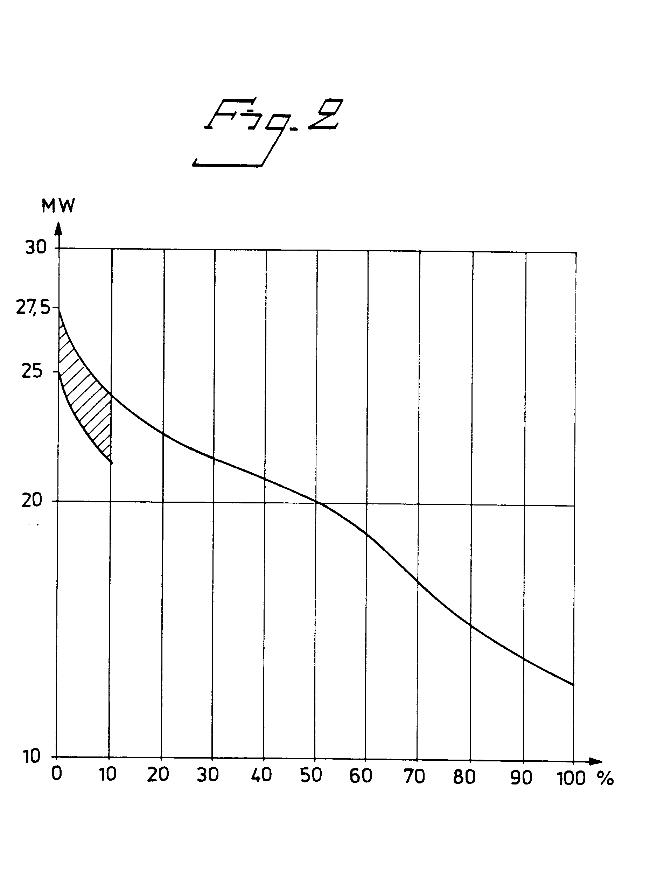

Fig. 2 illustrates an approximate curve which illustrates, in percent, the average power-load, including the load on the auxiliary power-unit, during the period MA-FR. It will be seen from the curve that the power taken from the network at no time is less than about 13 MW and that the load exceeds 20 MW during about 52% of the 120 hours included by the period. The auxiliary power-unit has been operated during the twelve hours in which the load on the network has been at maximum and has therewith delivered 2.5 MW. This operation of the power-unit is represented by the hatched area in the diagram. The use of the auxiliary power-unit results in a reduction in the peak power-drain on the distribution network by about 10% with an auxiliary energy supply from the power-unit of only 1% of the total electricity consumed by the consumer area during the period MA-FR. Thus, short- term operation of the power-unit results in significant lowering of the peak-power drain on the distribution network. This is advantageous, since the auxiliary power-unit is relatively expensive to operate and should therefore be used over the shortest possible periods.

The invention is not restricted to the aforedescribed embodiment illustrated in Fig. 1, but can be realized in any appropriate manner which lies within the scope of the inventive concept as defined in the claims. For example, it is possible, in accordance with the invention, to avoid predicted peak power-loads, by disconnecting temporarily electricity-consuming units, as mentioned in the introduction, or by combining temporary operation of an auxiliary power-unit and temporarily disconnecting electricity-consuming units.

## Claims

1. A method of supplying electricity to an electricity consumer area in which consumption of electricty varies and to which electricity is supplied from a distribution network which is intended to supply a plurality of such consumer areas, wherein peak-loads on the distribution network are avoided by bringing into use at least one auxiliary power-unit, which is separate from said network, and/or by disconnecting one or more loads within the consumer area; measuring the power load on the network; establishing a prognosis of the average power consumption of said consumer area over at least some of a plurality of part-periods, e.g. hours, which together form a full period (MA-FR), e.g. a month, a week, etc., on the basis of factors which influence the level of power consumption, for instance such factors as a given time of day, a particular day of the week, the date, the ambient temperature, wind, etc., characterised by avoiding, during the part-period concerned, solely those predicted peak-loads on the network which would cause the average load on said network during the part-period concerned to exceed at least the lowest average power-load on the distribution network during a pre-determined number of earlier part-periods within the same full period which have the thitherto highest average power load.

2. A method according to Claim 1, characterized by avoiding solely those predicted power loads which exceed a pre-determined minimum value (EO) for the full period in question.

3. A method according to Claim 1 or 2, characterized by applying the method solely during full periods or part-periods in which the average power-load on the network is relatively high.

4. A method according to any one of Claims 1-3, characterized in that the auxiliary power-unit used comprises at least one motor-driven electricity generator, the motor of which is started with the aid of the generator, which is then driven by the network.

## Patentansprüche

1. Verfahren zur Elektrizitätsversorgung eines Elektrizitätverbrauchergebiets, in dem der Elektrizitätsverbrauch schwankt und dem Elektrizität von einem Verteilernetz zugeführt wird, das eine Mehrzahl solcher Verbrauchergebiete zu versorgen hat, wobei Spitzenbelastungen des Verteilernetzes dadurch vermieden werden, daß zumindest eine Hilfsstromeinheit in Gebrauch genommen wird, die vom Netz getrennt ist, und- /oder dadurch, daß einer oder mehrere der Verbraucher im Verbrauchergebiet abgeschaltet werden, die Strombelastung des Netzes gemessen wird, eine Vorhersage des durchschnittlichen Stromverbrauchs des Verbrauchergebiets über zumindest einige einer Mehrzahl von Teilperioden, z.B. Stunden, die zusammen eine volle Periode (MO-FR), z.B. einen Monat, eine Woche usw., bilden, auf der Basis von Faktoren erstellt wird, die die Höhe des Stromverbrauchs beeinflussen, zum Beispiel solcher Faktoren wie einer gegebenen Tageszeit, eines bestimmten Wochentages, des Datums, der Umgebungstemperatur, des Windes usw., dadurch gekennzeichnet, daß während der betreffenden Teilperiode nur diejenigen vorhergesagten Spitzenbelastungen des Netzes vermieden werden, die dazu führen würden, daß die Durchschnittsbelastung des Netzes während der betreffenden Teilperiode zumindest die niedrigste Durchschnittsstrombelastung des Verteilernetzes während einer vorbestimmten Anzahl früherer Teilperioden innerhalb derselben vollen Periode, die die bis dahin höchste Durchschnittsstrombelastung aufweisen, übersteigt.

2. Verfahren nach Anspruch 1, dadurch gekennzeichnet, daß nur diejenigen vorhergesagten Strombelastungen vermieden werden, die einen vorbestimmten Kleinstwert EO für die fragliche volle Periode übersteigen.

3. Verfahren nach Anspruch 1 oder 2, dadurch gekennzeichnet, daß das Verfahren nur während voller Perioden oder Teilperioden angewandt wird, in denen die Durchschnittsstrombelastung des Netzes verhältnismäßig hoch ist.

4. Verfahren nach einem der Ansprüche 1 bis 3, dadurch gekennzeichnet, daß die verwendete Hilfsstromeinheit zumindest einen motorangetriebenen Stromgenerator umfaßt, dessen Motor mit Hilfe des Generators gestartet wird, der dann vom Netz angetrieben wird.

## Revendications

1. Un procédé d'alimentation en électricité d'une zone de consommation d'électricité dans laquelle la consommation d'électricité varie et à laquelle l'électricité est fournie à partir d'un réseau de distribution destiné à alimenter une pluralité de telles zones de consommation, dans lequel les charges de crête ou de pointe du réseau de distribution sont évitées en mettant en service au moins une unité génératrice auxiliaire qui est séparée dudit réseau, et/ou en déconnectant une ou plusieurs charges dans la zone de consommation; on mesure la charge de puissance du réseau; on établit une prévision de la consommation moyenne de puissance de ladite zone de consommation sur au moins certains d'une pluralité d'intervalles partiels, par exemple des heures, qui, pris ensemble, constituent une période complète (LU-VE), par exemple un mois, une semaine, etc.., sur la base des facteurs qui influencent le niveau de consommation de puissance, par exemple des facteurs tels qu'un instant donné de la journée, une journée particulière de la semaine, la date, la température ambiante, le vent, etc..., caractérisé par le fait qu'on évite, pendant l'intervalle partiel concerné, uniquement celles des charges de crête prédites sur le réseau qui conduiraient la charge moyenne sur ledit réseau pendant l'intervalle partiel concerné, à dépasser au moins la charge de puissance moyenne la plus faible sur le réseau de distribution pendant un nombre prédéterminé d'intervalles partiels précédents à l'intérieur de la même période complète qui présente la charge de puissance moyenne jusqu'alors la plus élevée.

2. Un procédé selon la revendication 1, caractérisé en ce qu'on évite uniquement les charges de puissance prédites qui dépassent une valeur minimale prédéterminée (EO) pendant la période complète concernée.

3. Un procédé selon la revendication 1 ou 2, caractérisé en ce qu'on applique le procédé uniquement pendant des périodes complètes ou des périodes partielles au cours desquelles la charge de puissance moyenne sur le réseau est relativement élevée.

4. Un procédé selon l'une quelconque des revendications 1 à 3, caractérisé en ce que l'unité génératrice auxiliaire utilisée comporte au moins un générateur électrique entraîné par un moteur, et dont le moteur est démarré à l'aide du générateur qui est alors alimenté par le réseau.
